# EUROPEAN PATENT SPECIFICATION

(11) **EP 1 743 480 B1**
(45) Date of publication and mention of the grant of the patent: **20.08.2008**
(21) Application number: 05741793.3
(22) Date of filing: 26.04.2005
(51) Int. Cl.: H04N 5/74

(54) **STRUCTURE FOR MOUNTING A LIGHT ENGINE IN A PROJECTION DISPLAY**
STRUKTUR ZUM ANBRINGEN EINER LICHT-ENGINE IN EINER PROJEKTIONSANZEIGE
STRUCTURE POUR MONTER UN MOTEUR DE LUMIERE DANS UN ECRAN DE PROJECTION

(30) Priority: 04.05.2004 US 567924 P
(43) Date of publication of application: 17.01.2007
(73) Proprietor: Thomson Licensing, 92100 Boulogne-Billancourt (FR)
(72) Inventor: DUGGAN, Scott, Joseph, Indianapolis, Indiana 46256 (US); RITTER, Darin, Bradley, Indianapolis, Indiana 46240 (US); YODER, Mark, Alan, Carmel, Indiana 46033 (US)
(74) Representative: Ruellan-Lemonnier, Brigitte
(86) International application number: PCT/US2005/014162
(87) International publication number: WO 2005/112443

(56) References cited:
- EP-A- 0 433 469
- EP-A- 0 766 465
- US-A- 4 506 295
- US-A- 5 580 146
- PATENT ABSTRACTS OF JAPAN vol. 1995, no. 06, 31 July 1995 (1995-07-31) & JP 07 079398 A (HITACHI LTD), 20 March 1995 (1995-03-20)

## Description

### FIELD OF THE INVENTION

The invention relates generally to a projection display and, in particular a light engine mounthig system for a projection display.

### BACKGROUND OF THE INVENTION

Some new projection televisions include a light engine. Such projection televisions require very critical stability at the light engine in order to maintain image stability on the screen. This is primarily due to the steep "upangle" that the ray path follows. Small amounts of cabinet creep and/or movement due to thermal expansion mismatches can cause unacceptable image movement on the screen.

Previous projection displays have little or no "upangle" in their raypaths. The mounting arrangement used in such projection displays for the light engines is not nearly so sensitive to position and rotational tolerances. These projection displays have used conventional sheet metal and molded plastic mounting systems without regard to thermal expansion differences or creep.

US 4,506,295 describes a projection display frame 21 including a base 22, four upright members 26, 27, 30, 31 and brace members 22, 23, 32, 33, and a three-sided subframe structure 35 where projection tubes 10, 11, 12 are mounted on a mounting panel 36 attached between two of the four upright members 26, 27 and the three-sided frame structure 31. EP-A-0 433 469 describes a projection display mounted on a stand with two support members attached on an outer surface of the projection display, with a projector mounted separate from the support members on the stand under the projection display, so the projector is hidden when the projection display is compacted for storage. EP-A-0 766 465, US 5,580,146 and JP 07 079398 generally relate to rear projection displays.

### SUMMARY OF THE INVENTION

A projection display provides precise positioning and stable mounting of a light engine to support an upangle raypath. Two structural support arms are provided for mounting the projection display on a stand or on a bracket. A light engine generates a light pattern to be displayed by the projection display. A bridge plate spans the two support arms and the light engine is mounted on the bridge plate.

### BRIEF DESCRIPTION OF THE DRAWINGS

The invention will now be described by way of example with reference to the accompanying figures of which:
Figure 1 is a front perspective view of the structural elements of a projection display according to an exemplary embodiment of the present invention with its screen omitted;
Figure 2 is a front perspective view of the structural elements of the projection display of Figure 1 with its cabinet omitted;
Figure 3 is a back perspective view of the structural elements of the projection display of Figure 1 with its cabinet omitted;
Figure 4 is a front view of the projection display of the structural elements of the Figure 1 showing a light engine mounting; and
Figure 5 is a front perspective view of a projection display according to an exemplary embodiment of the invention.

### DETAILED DESCRIPTION

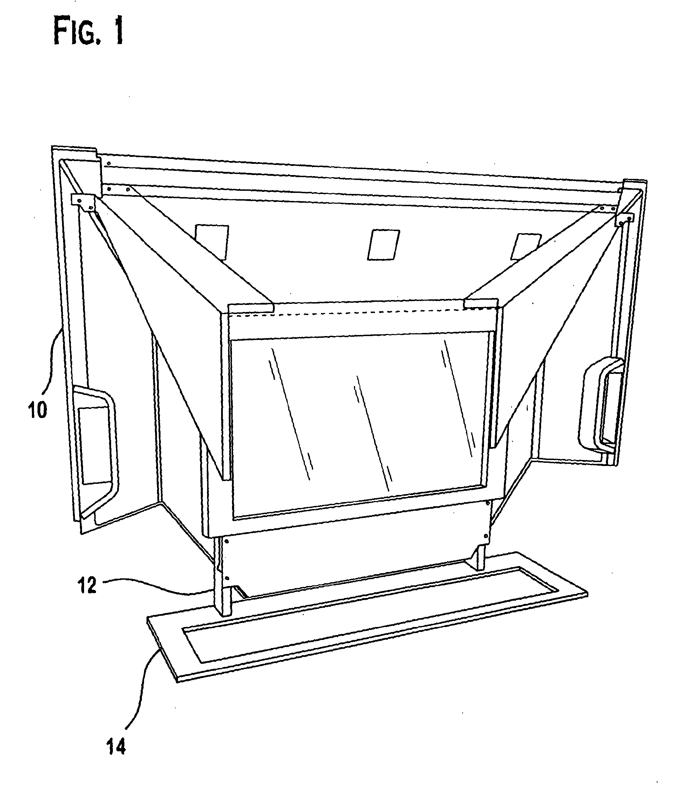

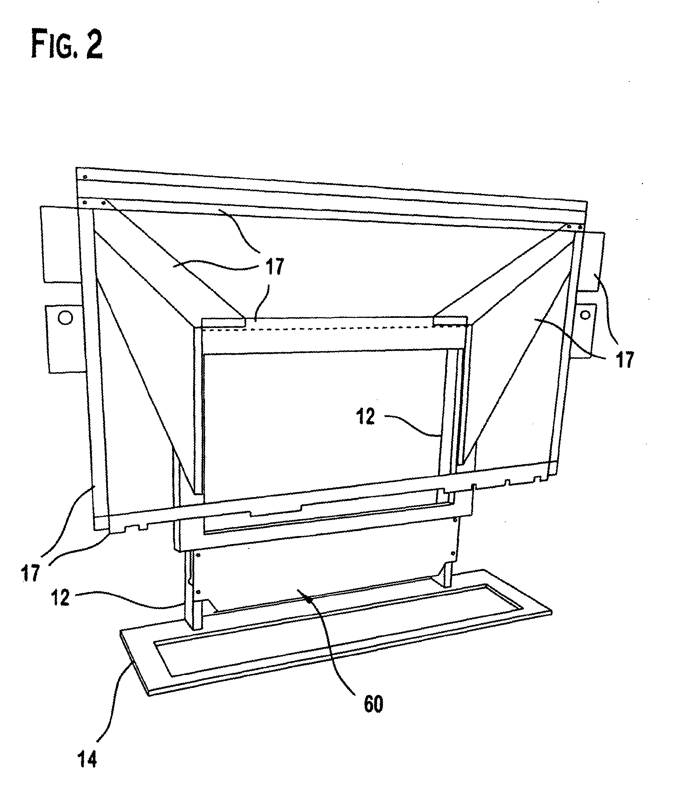

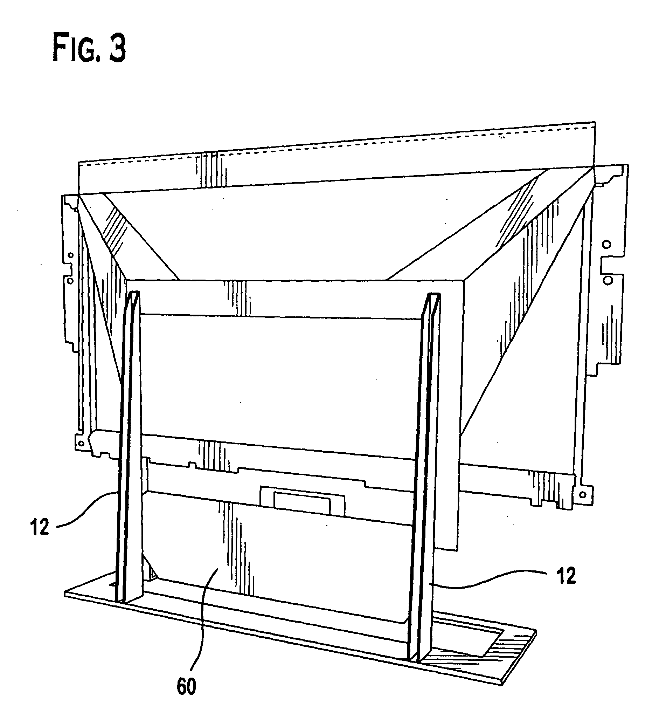

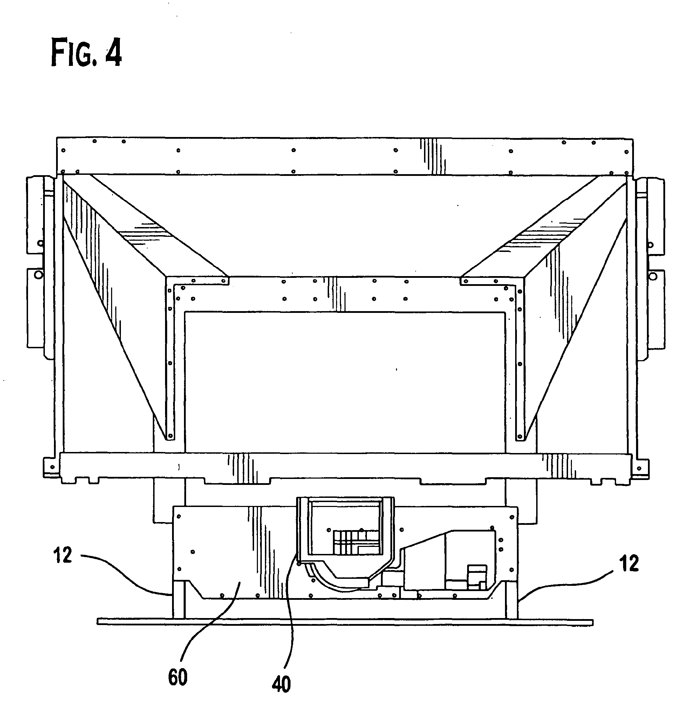

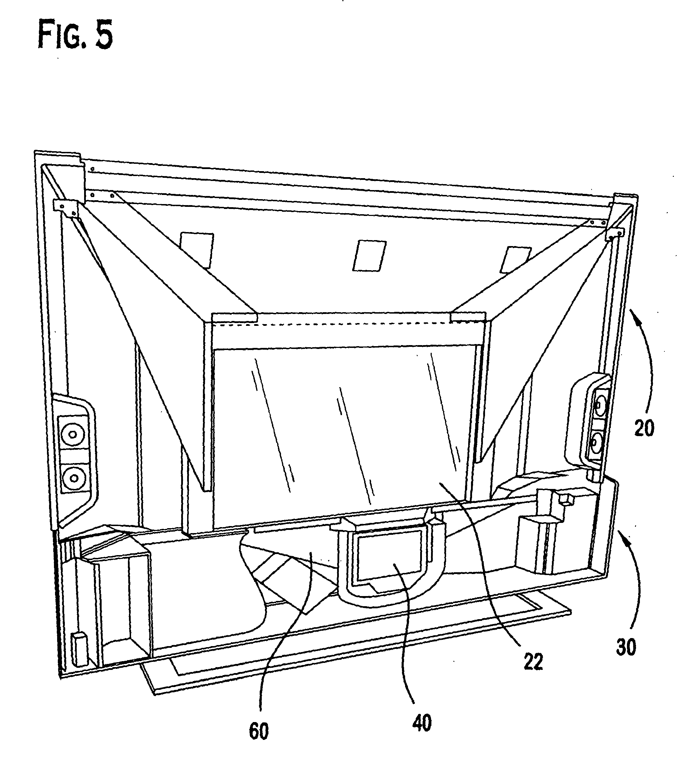

The present invention, shown in FIGS. 1-5, consists of a projection display in which a stiff bridge plate 60 spans a gap that is formed by two structural support arms 12 that are used to mount the projection display.

The structural support arms 12 are attached to a stand 14, as shown in the figures, for supporting the projection display on a floor or other substantially horizontal surface, or to a bracket (not shown) for mounting the projection display in a wall or other substantially non-horizontal surface. A support structure 17 is affixed to the structural support arms 12 opposite the stand 14. A cabinet 10 is fastened to the support arms 12 and the support structure 17. The cabinet 10 forms two cavities: a light box 20 in the upper portion of the cabinet and an electronics area 30 below the light box 20. A light engine 40 is positioned at the interface between the light box 20 and the electronics area 30. such that it can be electrically connected to electronics in the electronics area 30 white projecting a pattern of light upwardly into the light box 20.

To provide a slim profile, the light engine 40 projects the light pattern among an upangle raypath (i.e., at a steep angle), reflecting off of a mirror 22 at the back of the light box 20 and reflecting onto a screen (not shown) at the front of the light box 20. Due to this steep angle of the upangle raypath, small changes in the position of the light engine 40, such as the movements of the cabinet 10 due to thermal expansion, residual stress, or structural loading, can cause significant distortion of the projected image on the screen.

The support arms 12 are the only rigid structure in the projection display. The bridge plate 60 is designed to span between these two support arms 12 without being adversely influenced by the inherent instability of the plastic cabinet 10. The bridge plate is stiff, meaning that it provides sufficient stiffness, in view of its loading, to remain as stable as the support arms, preventing movement of the light engine 40 due to loading, thermal expansion, or other forces typically applied in a projection display system. Care should be taken to insure that attachment of parts with different coefficient of expansion allow for free expansion to prevent any adverse forces from being applied on the bridge plate 60.

Many different techniques may be used to construct the bridge plate 60 to provide the necessary stiffness. For example, the bridge plate 60 may be made from a rigid steel stamping assembly that approximates a "box beam". The bridge plate 60 may alternatively be made from an aluminum extrusion or from a single steel stamping or a metal casting.

The foregoing illustrates some of the possibilities for practicing the invention. It is, therefore, intended that the foregoing description be regarded as illustrative rather than limiting, and that the scope of the invention is given by the appended claims together with their full range of equivalents.

## Claims

1. A projection display comprising:
- two structural support arms for mounting the projection display on a stand or on a bracket;
- a light engine for generating a light pattern to be displayed by the projection display:
- and a bridge plate, attached to and between the two support arms and having the light engine mounted thereon.

2. Projection display according to claim 1 having a cabinet forming a light box mounted on said support arms, **characterized in that** said light engine (40) is mounted on said bridgeplate (60) for projecting light images upwardly into said light box along a precise upangle raypath.

3. The projection display of claim 1 wherein the bridge plate (60) is made of steel parts.

4. The projection display of claim 3 wherein the bridge plate (60) is in the form of a box beam.

5. The projection display of claim 1 wherein the bridge plate (60) comprises an aluminum extrusion.

6. The projection display of claim 1 wherein the bridge plate (60) comprises a single steel part.

7. The projection display of claim 1 wherein the bridge plate (60) comprises a metal casting.

8. The projection display of claim 1, wherein parts with a coefficient of thermal expansion different from the bridge plate (60) attached to the bridge plate (60) by an attachment that allows for free expansion of the parts.

9. The projection display of claim 2 wherein the cabinet is mounted to the support arms (12) independently of the bridge plate (60).

## Patentansprüche

1. Projektionsanzeige, umfassend
- zwei tragende Stützarme zum Befestigen der Projektionsanzeige an einem Fuß oder an einer Konsole,
- eine Lichtmaschine zum Erzeugen eines von der Projektionsanzeige anzuzeigenden Lichtmusters
- und eine Brückenplatte, welche an und zwischen den beiden Stützarmen angebracht ist und an welcher die Lichtmaschine befestigt ist.

2. Projektionsanzeige nach Anspruch 1, die ein Gehäuse umfasst, welches eine an den Stützarmen befestigte Lichtbox bildet, **dadurch gekennzeichnet, dass** die Lichtmaschine (40) an der Brückenplatte (60) befestigt ist, um Lichtbilder nach oben in die Lichtbox entlang eines Strahlenwegs mit genauem Aufwärtswinkel zu projizieren.

3. Projektionsanzeige nach Anspruch 1, wobei die Brückenplatte (60) aus Stahlteilen besteht.

4. Projektionsanzeige nach Anspruch 3, wobei die Brückenplatte (60) die Form eines Kastenträgers hat.

5. Projektionsanzeige nach Anspruch 1, wobei die Brückenplatte (60) ein Stranggussprofil aus Aluminium umfasst.

6. Projektionsanzeige nach Anspruch 1, wobei die Brückenplatte (60) ein einzelnes Stahlteil umfasst.

7. Projektionsanzeige nach Anspruch 1, wobei die Brückenplatte (60) ein Metallgussteil umfasst.

8. Projektionsanzeige nach Anspruch 1, wobei Teile mit einem von der Brückenplatte (60) abweichenden Wärmeausdehnungskoeffizienten über eine Befestigung an der Brückenplatte (60) angebracht sind, die eine freie Ausdehnung der Teile ermöglicht.

9. Projektionsanzeige nach Anspruch 2, wobei das Gehäuse unabhängig von der Brückenplatte (60) an den Stützarmen (12) befestigt ist.

## Revendications

1. Appareil de projection d'images, comportant :
- deux bras structuraux de soutien destinés au montage de l'appareil de projection d'images sur un socle ou sur une applique ;
- un moteur de lumière destiné à générer un motif lumineux à afficher par l'appareil de projection d'images ;
- et une plaque de liaison fixée à et entre les deux bras de soutien et sur laquelle est monté le moteur de lumière.

2. Appareil de projection d'images selon la revendication 1, doté d'un caisson formant une boîte à lumière montée sur lesdits bras de soutien, **caractérisé en ce que** ledit moteur (40) de lumière est monté sur ladite plaque (60) de liaison afin de projeter des images lumineuses vers le haut dans ladite boîte à lumière le long d'un trajet de rayons précis à angle ascendant.

3. Appareil de projection d'images selon la revendication 1, la plaque (60) de liaison étant constituée de pièces en acier.

4. Appareil de projection d'images selon la revendication 3, la plaque (60) de liaison se présentant sous la forme d'une poutre en caisson.

5. Appareil de projection d'images selon la revendication 1, la plaque (60) de liaison comportant un profilé en aluminium.

6. Appareil de projection d'images selon la revendication 1, la plaque (60) de liaison comportant une seule pièce en acier.

7. Appareil de projection d'images selon la revendication 1, la plaque (60) de liaison comportant une pièce moulée en métal.

8. Appareil de projection d'images selon la revendication 1, les pièces présentant un coefficient de dilatation thermique différent de celui de la plaque (60) de liaison étant fixées à la plaque (60) de liaison par un élément de fixation permettant la dilatation libre des pièces.

9. Appareil de projection d'images selon la revendication 2, le caisson étant monté sur les bras (12) de soutien indépendamment de la plaque (60) de liaison.
